# EUROPÄISCHE PATENTSCHRIFT

(11) **EP 1 927 148 B1**
(45) Veröffentlichungstag und Bekanntmachung des Hinweises auf die Patenterteilung: **04.03.2009**
(21) Anmeldenummer: 06805286.9
(22) Anmeldetag: 13.09.2006
(51) Int. Cl.: H01M 2/20, H01M 2/30

(54) **AKKUMULATOR, AKKUMULATORBLOCK UND VERFAHREN ZUR HERSTELLUNG DERSELBEN**
ACCUMULATOR, ACCUMULATOR GROUP AND METHOD FOR PRODUCTION THEREOF
ACCUMULATEUR, BLOC ACCUMULATEUR ET PROCEDE DE PRODUCTION ASSOCIE

(30) Priorität: 23.09.2005 DE 102005045418
(43) Veröffentlichungstag der Anmeldung: 04.06.2008
(73) Patentinhaber: VARTA Automotive Systems GmbH, 30419 Hannover (DE)
(72) Erfinder: WIEPEN, Rolf, 58239 Schwerte (DE)
(74) Vertreter: Gerstein, Hans Joachim
(86) Internationale Anmeldenummer: PCT/DE2006/001624
(87) Internationale Veröffentlichungsnummer: WO 2007/033645

(56) Entgegenhaltungen:
- EP-A2- 1 291 939
- DE-B3- 10 323 529
- US-A- 3 650 841

## Beschreibung

Die Erfindung betrifft einen Akkumulator mit einem quaderförmigen Gehäuse, einem eine Vielzahl von alternierend übereinander angeordneten mit zwischenliegenden Separatoren voneinander getrennten positiven und negativen Elektrodenplatten aufweisenden Elektrodenplattenstapel, sowie Elektrolyt in dem zum Einführen des Elektrodenplattenstapels eine mit einem Deckel verschließbare Öffnung aufweisenden Gehäuse, wobei die positiven Elektrodenplatten an einer ersten Seitenkante des Elektrodenplattenstapels miteinander verbunden sind, die negativen Elektrodenplatten an der zweiten, der ersten Seitenkante gegenüberliegenden Seitenkante des Elektrodenplattenstapels miteinander verbunden sind und die negativen Elektrodenplatten die Innenseite des Gehäuses elektrisch kontaktieren.

Die Erfindung betrifft weiterhin einen Akkumulatorblock mit einer Vielzahl von derartigen Akkumulatoren.

Die Erfindung betrifft weiterhin ein Verfahren zur Herstellung von solchen Akkumulatoren und Akkumulatorenblöcken.
Hochleistungsfähige Batteriesysteme werden beispielsweise in Hybridfahrzeugen als Energiespeichersystem benötigt. Sie müssen für kurze Zeiten hohe Leistungen abgeben und innerhalb kurzer Zeitintervalle große elektrische Leistungen absorbieren können. Im Extremfall folgen diese Entlade- und Rückladevorgänge in enger zeitlicher Folge. Da sowohl Entlade- als auch Ladevorgänge mit Energieverlusten durch (Ohm'sche oder elektrochemische) Polarisation verbunden sind, kommt es bei Dauerbetrieb von Batteriesystemen durch diese Energieverluste bedingt zu beträchtlicher Wärmebildung. Diese kann zu einer erheblichen Erwärmung der Zellen und damit zu einer Einschränkung ihres Betriebsbereichs führen. Bei hohen Temperaturen stehen z.B. bei Nickelmetallhydrid NiMH- oder Nickel-Cadmium NiCd-Akkumulatoren volle Leistungen nur bis zu 60 % des Ladezustands zur Verfügung.

Zum anderen können hohe Betriebstemperaturen in Batterien zur Verkürzung der Lebensdauer führen. Verantwortlich für solche die Lebensdauer verkürzenden Vorgänge sind chemische Vorgänge an den Elektroden, die die Speicherfähigkeit der Materialien bzw. die Geschwindigkeit, mit der sie die elektrische Leistung aufnehmen können, kontinuierlich verringern. Hohe Temperaturen können auch zu Verlusten des flüssigen Elektrolyts führen, der durch die bei erhöhten Temperaturen verstärkt durchlässigen Dichtungsmaterialien wandern kann. Insbesondere elektrochemische Speichersysteme, die Kunststoff als Gehäusematerialien verwenden, können von hohen Elektrolytverlusten durch diese Diffusion/Permeations-Prozesse betroffen sein.

Bei einem NiMH-System, das heute in zunehmender Zahl in Hybridfahrzeugen eingesetzt wird, kann überdies noch der Verlust von Wasserstoff durch die Wandung von Kunststoffgehäusen als schädigende Wirkung dazukommen. Da in der Wasserstoff-Speicherlegierung eingelagerter Wasserstoff das eigentliche aktive negative Elektrodenmaterial darstellt, kann sein Verlust das Speichersystem in seiner Funktion erheblich stören.

In der alkalischen Batterietechnik wird bevorzugt Stahl für die Batteriegehäuse eingesetzt, der in dünner Ausführung sowohl gegen Wasserpermeation schützt als auch H₂-Permeation weitgehend unterbindet. Nachteilig sind die beschränkten Gestaltungsmöglichkeiten von Stahl, besonders was die dünnwandigen Ausformungen betrifft. Dünnwandige Gehäuse sind aber aus Gründen der Gewichtsersparnis zwingend.

Da Akkumulatoren in ihrer gasdichten Ausführung in bestimmten Betriebszuständen (hohe Temperatur, Überladung etc.) internen Druck aufbauen können, ist ein stabiles Gehäuse notwendig, das auch gleichzeitig Wärme effizient abtransportieren kann.

Eine ideale technische Lösung stellen zylindrische Stahlzellen dar, wie sie heute im großen Umfang für Gerätebatterie-Anwendung genutzt werden. Zylindrische Bauformen sind selbst gegen hohe Drücke stabil. Dadurch ermöglicht es dünnwandige Metallgefäße gestatten den raschen Wärmetransfer. Die zylindrische Bauweise ist jedoch auf relativ kleine Zellen beschränkt. Mit größerer Zellkapazität steigt der Durchmesser, womit die Wärmeabfuhr aus dem Inneren erschwert wird.

Eine im Hinblick auf Wärmetransfer grundsätzlich günstige Bauform stellen flache, prismatische Akkumulatoren dar, die zu Akkumulatorenblöcken zusammengefasst werden können.

In S. Hamada, T. Asahina, T. Matsuurah, H. Miyamoto, T. Ito: "Development of New Prismatic Type Ni-MH Battery for HEV", in: Proceedings of the 5th Advanced Automotive Battery Conference, Honolulu, Hawaii, 13.-17. Juni 2005, Session 4, No. 16, ist ein Akkumulator mit Metallgehäuse beschrieben, bei dem ein mit den negativen Elektrodenplatten verbundenes Ableiterkontaktblech mit dem Batteriegehäuse verschweißt ist. Auf der gegenüberliegenden Seite des Gehäuses sind positive Polanschlüsse aus dem Metallgehäuse herausgeführt und mit einem Isolierkäfig von dem Gehäuse elektrisch isoliert. Zur Verbindung aneinander angrenzender Akkumulatoren werden die positiven Anschlüsse mit der den negativen Pol bildende Anschlusskontaktplatte des Gehäuses verschweißt.

Aus dem Gehäuse ist ein Gasüberdruckventil herausgeführt, wobei die Gasüberdruckventile einer Reihe von Akkumulatoren miteinander über einen Gasableitungskanal verbunden sind, der auf die Gasüberdruckventile aufgesteckt wird.

Der Akkumulatorblock wird mit einem Isolierfilm überzogen, um Kurzschlüsse zu vermeiden.

Eine ähnliche Ausführungsform von Akkumulatoren ist in T. Hayashi, M. Ito, T. Ishishita, Y. Arase: "Development of New Battery System for Hybrid Vehicles", in: Proceedings of the 5th Advanced Automotive Battery Conference, Honolulu, Hawaii, 13.-17. Juni 2005, Session 4, beschrieben. Auch hier wird ein Metallgehäuse für den Akkumulator vorgeschlagen und die Elektroden werden direkt mit dem Batteriegehäuse und dem positiven Pol verschweißt, um Verbindungsraum einzusparen.

In der U.S. 2004/0248002 A1 ist ein prismatischer Akkumulator beschrieben, bei dem der positive Pol durch eine Bohrung im Deckel des Gehäuses hindurchgeführt wird. Der positive Pol ist in der Art einer Niet verformbar und quetscht einen durch die Bohrung hindurchgeführten Dichtring ein, wenn der positive Pol an dem Deckel befestigt wird. Nach dem Einsetzen des Elektrodenplattenstapels in das Gehäuse und dem Abschließen des Deckels liegt der positive Pol an einem Ableiterkontaktblech für die positiven Elektrodenplatten an. Der Deckel wird dann mit dem Gehäuse verschweißt und mit Hilfe der hohlen Ausführungsform des nietenartigen positiven Pols kann ein Laserverschweißen des positiven Pols mit dem Ableiterkontaktblech für die positiven Elektrodenplatten erfolgen.

In der DE 101 44 281 A1 ist eine Rundzelle beschrieben, bei der Wickelelektroden mit einem Kontaktfahnen aufweisenden Ableiterblech verschweißt sind. Die Kontaktfahnen sind so gebogen, dass sie an Innenflächen eines Gehäusebechers anliegen.

Aus der JP 2000-048803 ist ein Akkumulator bekannt, bei dem die positiven und negativen Elektrodenplatten jeweils mit einem durch einen Gehäusedeckel kontaktiert werden. Dabei ist eine den Schraubbolzen umgebende Isolierhülse und ein Dichtring im Innenraum angrenzend an den Gehäusedeckel vorgesehen, die fluchtend zu einer Durchtrittsbohrung im Gehäusedeckel für einen Schraubbolzen angeordnet sind. Der Schraubbolzen, die Isolierhülse, der Dichtring und der Gehäusedeckel werden mit einer Mutter verspannt.

Bei den herkömmlichen Akkumulatoren stellt sich das Problem der erforderlichen hohen Fertigungstoleranzen, um eine sichere Abdichtung und optimale Kontaktierung sicherzustellen.

Aufgabe der vorliegenden Erfindung ist es daher, einen verbesserten Akkumulator zu schaffen. Die Aufgabe wird mit dem Akkumulator der eingangs genannten Art erfindungsgemäß dadurch gelöst, dass die negativen Elektrodenplatten mit einem umgebogene Kontaktlaschen aufweisenden Ableiterkontaktblech verbunden sind und die sich von der zweiten Seitenkante zur ersten Seitenkante des Elektrodenplattenstapels erstreckenden Kontaktlaschen federnd an der Innenseite des Gehäuses anliegen und einen elektrischen Kontakt zu dem Gehäuse bilden. Ein mit Anschlusskontakten der positiven Elektrodenplatten elektrisch und mechanisch verbindbares Verbindungsprofil ist mit einem sich parallel zum Deckel erstreckenden U-förmigen Basisabschnitt und zwei parallelen Flankenabschnitten versehen, die sich vom Basisabschnitt weg erstrecken und angeordnet sind, um das Gehäuse eines angrenzenden Akkumulators zu umfassen und elektrisch zu kontaktieren.

Bei dem quaderförmigen Gehäuse sorgen die umgebogenen Kontaktlaschen des Ableiterkontaktblechs für einen Ausgleich von Fertigungstoleranzen und eine gute elektrische Kontaktierung des Gehäuses. In Verbindung mit dem das Gehäuse vorzugsweise im Bereich der Kontaktlaschen umschließenden U-förmigen Basisabschnitts des Verbindungsprofils wird ein guter elektrischer Anschluss bei einfacher Montage sichergestellt.

Die Verbindung der positiven Pole mit dem einen negativen Anschlusspol bildenden Gehäuse eines angrenzenden Akkumulators erfolgt somit durch die U-förmigen Verbindungsprofile, die elektrisch und mechanisch mit den Anschlusskontakt-Gewindestäben eines Akkumulators verbunden sind. Die Verbindung kann beispielsweise durch Verschrauben oder Verschweißen erfolgen. Das U-förmige Verbindungsprofil hat einen sich parallel zum Deckel erstreckenden Basisabschnitt, der mit den Anschlusskontakt-Gewindestäben verbunden ist, sowie zwei parallele Flankenabschnitte, die sich vom Basisabschnitt weg erstrecken und so angeordnet sind, dass die Flankenabschnitte das Gehäuse eines angrenzenden Akkumulators umfassen und dieses elektrisch kontaktieren. Hierzu können die Flankenabschnitte mit dem Gehäuse zusätzlich verschweißt werden.

In einer bevorzugten Ausführungsform ist mindestens ein Anschlusskontakt-Gewindestab an der ersten Seitenkante des Elektrodenplattenstapels vorgesehen ist, der mit den positiven Elektrodenplatten einen elektrischen Kontakt bildet, von der ersten Seitenkante hervorragt und durch eine zugeordnete Bohrung in dem Deckel hindurchgeführt ist. Ein Dichtring umfasst den Anschlusskontakt-Gewindestab umfasst und liegt an der Innenseite des Deckels an. Eine Isolierbuchse als elektrischer Isolator umfasst den Anschlusskontakt-Gewindestab, liegt an der Außenseite des Deckels an und erstreckt sich in die Bohrung des Deckels hinein. Eine Spannmutter ist auf den Anschlusskontakt-Gewindestab geschraubt und auf die Isolierbuchse zur Verspannung des Dichtrings und der Isolierbuchse an dem Deckel aufgesetzt.

Durch die Nutzung eines Anschlusskontakt-Gewindestabs zur Ausbildung des positiven Pols kann eine mechanische Verspannung des Dichtrings und der Isolierbuchse zur Abdichtung der Poldurchführungen im Deckel erfolgen. Diese Ausführungsform hat den Vorteil, dass der Dichtring und die Isolierbuchse keiner nennenswerten Wärmebelastung bei der Herstellung ausgesetzt sind, da der Deckel zunächst mit dem Gehäuse verschweißt werden kann, ohne dass der Dichtring und die Isolierbuchse fest an dem Deckel anliegen. Erst anschließend nach Abkühlen des Deckels kann das Verspannen des Dichtrings und der Isolierbuchse mit der Spannschraube erfolgen. Diese Ausführungsform hat zudem den Vorteil, dass eine einfache und preiswerte Montage des Akkumulators gewährleistet ist.

Der Deckel sollte an seinem Außenumfang dicht mit dem Gehäuse verschweißt sein. Zusätzlich oder alternativ ist aber auch ein Vercrimpen des Deckels an dem Gehäuse denkbar.

Besonders vorteilhaft ist es, wenn sich die Isolierbuchse über die Fläche des Deckels erstreckt und Hülsenabschnitte zum Einstecken in zugeordnete Bohrungen in dem Deckel hat. Damit ist durch ein einziges auf den Deckel aufgelegtes Element sichergestellt, dass kein Kurzschluss des Akkumulators durch Kontaktierung des Deckels mit dem Gehäuse eines angrenzenden Akkumulators erfolgt.

Die Isolierbuchsen sind vorzugsweise so ausgeführt, dass sie zwei parallele, sich von dem Deckelrand aus jeweils an den sich gegenüberliegenden Außenwänden des Gehäuses mindestens teilweise entlang erstreckende Abstandshalter haben. Die Abstandshalter sollten voneinander beabstandete Rippen zur Schaffung von Kühlkanälen zwischen angrenzenden Akkumulatoren aufweisen. Die Isolierbuchsen können damit auch gleichzeitig eingesetzt werden, um in einem Akkumulatorblock einen Kurzschluss zwischen den Akkumulatoren zu vermeiden. Gleichzeitig wird durch die voneinander beabstandeten Rippen sichergestellt, dass ein Luft- oder Fluid-Kühlstrom zwischen den Akkumulatoren des Akkumulatorenblocks ziehen kann, um Wärme effektiv abzuführen.

Zum Ausgleich von Höhenunterschieden kann ein Metallschaum zwischen den Anschlussenden der negativen und/oder positiven Elektrodenplatten und einem zugeordneten Ableiterkontaktblech vorgesehen sein. Ein solcher Metallschaum, beispielsweise Nickelschaum, hat durch seine Verformbarkeit bedingt den Vorteil, auf einfache und zuverlässige Weise geringfügige Höhendifferenzen zwischen den Elektrodenkanten beim Schweißprozess zur Verbindung des Ableiterkontaktblechs mit den Anschlussenden der Elektrodenplatten auszugleichen und damit eine sichere Anbindung aller Elektrodenplatten zu ermöglichen.

Die Dichtringe sind vorzugsweise als O-Ringe aus gummihaltigem Material (z.B. aus EPDM-Ethylen/Propylen-Dien-Terpolymer) ausgeführt.

Die gegebenenfalls aus einer Seitenkante des Gehäuses herausgeführten Gasüberdruckventile werden bei einem Akkumulatorblock vorzugsweise mit einem Gasableitschlauch miteinander verbunden, um gegebenenfalls austretendes Gas nach außen aus einem Akkumulatorenblock herausführen zu können.

Zur Isolierung sind die Akkumulatoren vorzugsweise mit einer Kunststofffolie, einem Schrumpfschlauch oder einem Isolierlack überzogen. Dabei ist es vorteilhaft, wenn eine Reihe von miteinander verbundenen Akkumulatoren zusammen isoliert wird.

Aufgabe der Erfindung ist es weiterhin, ein verbessertes Verfahren zur Herstellung der oben beschriebenen Akkumulatoren und daraus gebildeten Akkumulatorenblöcken zu schaffen.

Die Aufgabe wird mit dem Verfahren gelöst durch die Schritte:
a) Einschieben eines Elektrodenplattenstapels mit einem federnd den Kontaktlaschen aufweisenden Ableiterkontaktblech an den negativen Elektrodenplatten in das Gehäuse des Akkumulators so, dass die Kontaktlaschen federnd an der Innenseite des Gehäuses anliegen und mindestens ein Anschlusskontakt-Gewindestab an der dem Ableiterkontaktblech gegenüberliegenden Seitenkante des Elektrodenplattenstapels aus der Öffnung des Gehäuses, durch die der Elektrodenplattenstapel in das Gehäuse eingeschoben wird, herausragt,
b) Aufsetzen von Dichtringen auf den mindestens einen Anschlusskontakt-Gewindestab,
c) Auflegen eines Bohrungen aufweisenden Deckels auf die Öffnung derart, dass jeweils ein Anschlusskontakt-Gewindestab durch eine zugeordnete Bohrung ragt,
d) Verbinden des Deckels mit dem Gehäuse so, dass die Öffnung dicht verschlossen ist,
e) Aufsetzen mindestens einer Isolierbuchse auf den Deckel, wobei sich jeweils ein Abschnitt der Isolierbuchse in den Zwischenraum eines zugeordneten Anschlusskontakt-Gewindestabs und der Bohrung des Deckels hineinerstreckt,
f) Aufschrauben jeweils einer Spannmutter auf einen zugeordneten Anschlusskontakt-Gewindestab und Verspannen des Dichtrings und der Isolierbuchse mit dem Deckel zum dichten Verschließen der Bohrung,
g) Verbinden eines U-förmigen Verbindungsprofils mit den Anschlusskotakt-Gewindestäben eines Elektrodenplattenstapels und
h) Einschieben eines Gehäuses eines angrenzenden Akkumulators in das Verbindungsprofil so, dass sich zwei parallel Flankenabschnitte, die sich von einem mit den Anschlusskontakt-Gewindestäben verbundenen Basisabschnitt des Verbindungsprofils weg erstrecken, das Gehäuse des angrenzenden Akkumulators umfassen und elektrisch kontaktieren.

Durch die Montageschrittabfolge wird eine gute Kontaktierung ohne Notwendigkeit geringer Fertigungstoleranzen erreicht und sichergestellt, dass der Dichtring und die Isolierbuchse nicht beschädigt werden, wenn der Deckel mit dem Gehäuse verschweißt wird.

Weitere vorteilhafte Ausführungsformen der Erfindung sind in den Unteransprüchen beschrieben.

Die Erfindung wird nachfolgend anhand eines Ausführungsbeispiels mit den beigefügten Zeichnungen näher erläutert. Es zeigen:
- Figur 1 -: Schnitt-Seitenansicht einer ersten Ausführungsform des Akkumulators;
- Figur 2 -: Draufsicht auf ein Kontaktlaschen aufweisendes Anschlusskontaktblech für die negativen Elektrodenplatten;
- Figur 3 -: Seitenansicht eines Ableiterkontaktblechs für die positiven Elektrodenplatten mit aufgeschweißten Anschlusskontakt-Gewindestäben;
- Figur 4 -: Aufsicht auf den Deckel des Gehäuses mit den durchgeführten Anschlusskontakt-Gewindestäben für den positiven Pol;
- Figur 5 -: Teilschnitt-Seitenansicht des Akkumulators aus Figur 1 beim Herstellungsschritt des Verschweißens des Deckels mit dem Gehäuse;
- Figur 6 -: Teilschnitt-Seitenansicht des Akkumulators aus Figur 5 nach dem Schritt des Verschweißens des Deckels mit dem Gehäuse zum Abdichten der Bohrung in dem Deckel;
- Figur 7 -: Seitenansicht einer zweiten Ausführungsform des Akkumulators mit einer Schnittansicht einer den Deckel flächigabdeckenden Isolierbuchse;
- Figur 8 -: Draufsicht auf einen als Abstandshalter ausgeführte Isolierbuchse;
- Figur 9 -: Seitenansicht eines Akkumulators mit einer Isolierbuchse gemäß Figuren 7 und 8 und dadurch geschaffenen Kühlkanälen;
- Figur 10 -: Seitenansicht eines Akkumulatorblocks mit mehreren hintereinander geschalteten Akkumulatoren;
- Figur 11 -: Draufsicht auf den Akkumulatorblock auf Figur 10 mit drei nebeneinander angeordneten Reihen von Akkumulatoren.

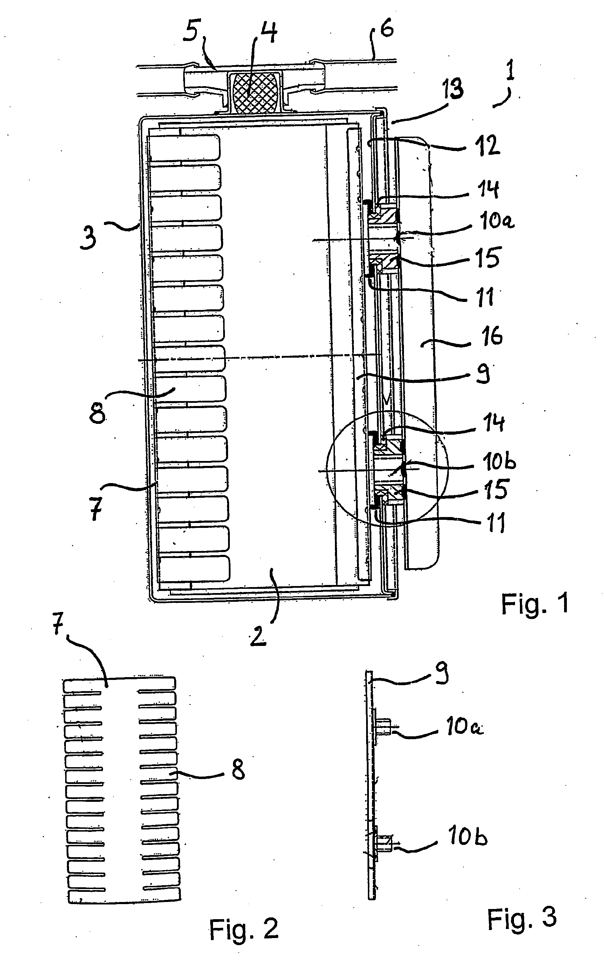

Die Figur 1 lässt eine Seitenansicht eines Akkumulators 1 im Schnitt erkennen, bei dem ein Elektrodenplattenstapel 2 in ein Gehäuse 3 hineingeschoben ist. An einer Seitenwand des Gehäuses 3 ist ein Gasüberdruckventil 4 angeordnet, um bei einem definierten Überdruck Gas aus dem Akkumulator 1 über ein auf das Gasüberdruckventil 4 aufgestecktes T-Stück 5 und einem Gasableitschlauch 6 nach außen zu leiten.

Die negativen Elektrodenplatten des Elektrodenplattenstapels 2 sind mit einem Ableiterkontaktblech 7 verschweißt, das eine Vielzahl federnde Kontaktlaschen 8 aufweist, die umgebogen sind und sich parallel zum Elektrodenplattenstapel 2 erstrecken. Die Kontaktlaschen 8 liegen an der Innenseite des Gehäuses 3 an, wenn der Elektrodenplattenstapel 2 wie dargestellt in das Gehäuse 3 hineingeschoben ist.

Die positiven Elektrodenplatten sind an der ersten Seitenkante gegenüberliegend von der zweiten Kante mit dem Ableiterkontaktblech 7 für die negativen Elektrodenplatten mit einem Ableiterkontaktblech 9 verschweißt. Auf das Ableiterkontaktblech 9 sind im Abstand voneinander zwei Anschlusskontakt-Gewindestäbe 10a, 10b angebracht und stehen im elektrischen Kontakt zu den positiven Elektrodenplatten. Jeweils ein Dichtring 11 umfasst den zugeordneten Anschlusskontakt-Gewindestab 10a, 10b, um eine Dichtung zwischen dem Ableiterkontaktblech 9 und einem Deckel 12 zu bilden, der eine Öffnung 13 des Gehäuses 3 abdeckt. Hierzu ist der Deckel 12 an der Außenkante mit der Außenkante des Gehäuses 3 im Bereich der Öffnung 13 verschweißt.

Auf die Anschlusskontakt-Gewindestäbe 10a, 10b ist eine Isolierbuchse 14 aufgesetzt, die sich in den Zwischenraum der Bohrung im Deckel 12 und im durch die Bohrung hindurchgeführten Anschlusskontakt-Gewindestab 10a, 10b hinein erstreckt. Die Isolierbuchse 14 hat einen scheibenförmigen Abschnitt zwischen Deckel 12 und einer Spannmutter 15, die auf den Anschlusskontakt-Gewindestab 10a, 10b aufgeschraubt ist. Mit Hilfe der Spannmutter 15 wird das Anschlusskontaktblech 9 und der Deckel 12 relativ zueinander bewegt, so dass der zwischenliegende Dichtring 11 eingespannt wird und für eine zuverlässige Abdichtung der Bohrung im Deckel 12 sorgt.

Mit der Isolierbuchse 14 wird sichergestellt, dass auch bei Belastung im Bereich der Bohrung des Deckels 12 kein Kurzschluss zwischen positivem Pol und dem den negativen Pol bildenden Gehäuse 3 entstehen kann.

Auf die Spannmuttern 15 und die Anschlusskontakt-Gewindestäbe 10a, 10b ist ein U-förmiges Verbindungsprofil 16 aufgeschweißt. Das U-förmige Verbindungsprofil 16 hat einen sich parallel zum Deckel 12 erstreckenden Basisabschnitt und zwei parallele Flankenabschnitte, die sich vom Basisabschnitt weg erstrecken und so angeordnet ist, dass das Gehäuse 3 eines angrenzenden Akkumulators 1 umfasst und elektrisch kontaktiert wird.

Die Figur 2 lässt eine Draufsicht auf das Anschlusskontaktblech 7 für den negativen Pol erkennen. Es wird deutlich, dass an beiden Längskanten des Anschlusskontaktblechs 7 Kontaktlaschen 8 vorgesehen sind, die nach dem Verschweißen des Anschlusskontaktblechs 7 im mittleren Bereich mit den Enden der negativen Elektrodenplatten des Elektrodenplattenstapels 2 umgebogen werden.

Die Figur 3 lässt eine Seitenansicht des Anschlusskontaktblechs 9 für den positiven Pol erkennen. Das Anschlusskontaktblech 9 wird auf der dargestellten linken Seiten mit den Enden der positiven Elektrodenplatte des Elektrodenplattenstapels 2 verschweißt. Auf der gegenüberliegenden Seite ragen die beiden Anschlusskontakt-Gewindestäbe 10a, 10b zur Bildung des positiven Pols hervor.

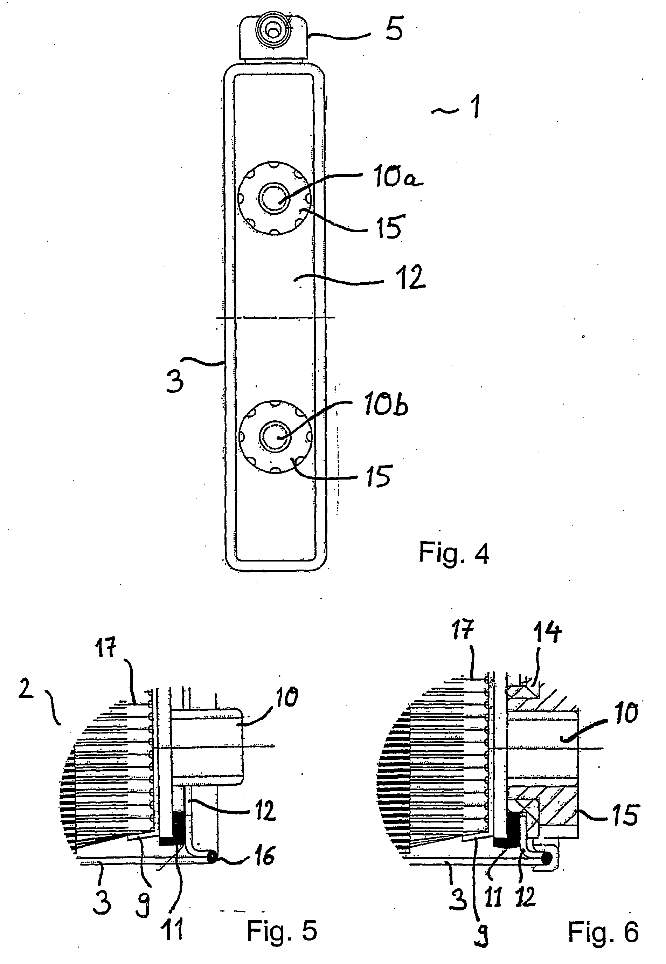

Die Figur 4 lässt eine Aufsicht auf die Seite des Akkumulators 1 mit dem Deckel 12 und den daraus hervorstehenden Anschlusskontakt-Gewindestäben 10a, 10b erkennen. Es wird deutlich, dass die Spannmuttern auf die Anschlusskontakt-Gewindestäbe 10a, 10b aufgeschraubt sind, um den Deckel 12 mit dem im Gehäuse 3 befindlichen Elektrodenplattenstapel 2 zu verspannen.

Die Schrittfolge des Fertigungsverfahrens zur Herstellung des Akkumulators 1 wird aus den Figuren 5 und 6 deutlicher, die einen Ausschnitt des Akkumulators 1 in der Schnittansicht im Bereich der Anschlusskontakt-Gewindestäbe 10 zeigen.

Nach dem Einschieben des Elektrodenplattenstapels 2 in das Gehäuse 3 wird der Dichtring 11 auf die Anschlusskontakt-Gewindestäbe 10 aufgesetzt und die Öffnung des Gehäuses 3 mit dem Deckel 12 verschlossen. Dieser Deckel 12 wird dann entlang einer Schweißbahn 16 dicht mit dem Gehäuse 3 verschweißt.

Anschließend wird eine Isolierbuchse 14 auf den Deckel 12 so aufgesetzt, dass sich jeweils ein Abschnitt der Isolierbuchse 14 in den Zwischenraum des Anschlusskontakt-Gewindestabs 10 und der Bohrung des Deckels 12 hinein erstreckt. Dann wird die Spannmutter 15 auf den Anschlusskontakt-Gewindestab 10 aufgesetzt und verschraubt, um so den Dichtring 11 und die Isolierbuchse 14 mit dem Deckel 12 zum dichten Verschließen der Bohrung zu verspannen.

Aus den Figuren 5 und 6 wird weiterhin deutlich, dass die Enden 17 der positiven Elektrodenplatten mit dem Anschlusskontaktblech 9 verschweißt sind. In entsprechender Weise sind die Enden der negativen Elektrodenplatten mit dem Anschlusskontaktblech 7 aus der Figur 2 verschweißt.

Besonders vorteilhaft ist es, wenn zwischen den Enden der Elektrodenplatten und dem entsprechenden Anschlusskontaktblech 7, 9 ein Metallschaum, vorzugsweise Nickelschaum, eingebracht ist, um Höhenunterschiede für den Schweißprozess auszugleichen und eine zuverlässige Kontaktierung der Enden der Elektrodenplatten mit dem Ableiterkontaktblech 7, 9 zu gewährleisten. Dies wird durch die Verformbarkeit des Metallschaums erreicht.

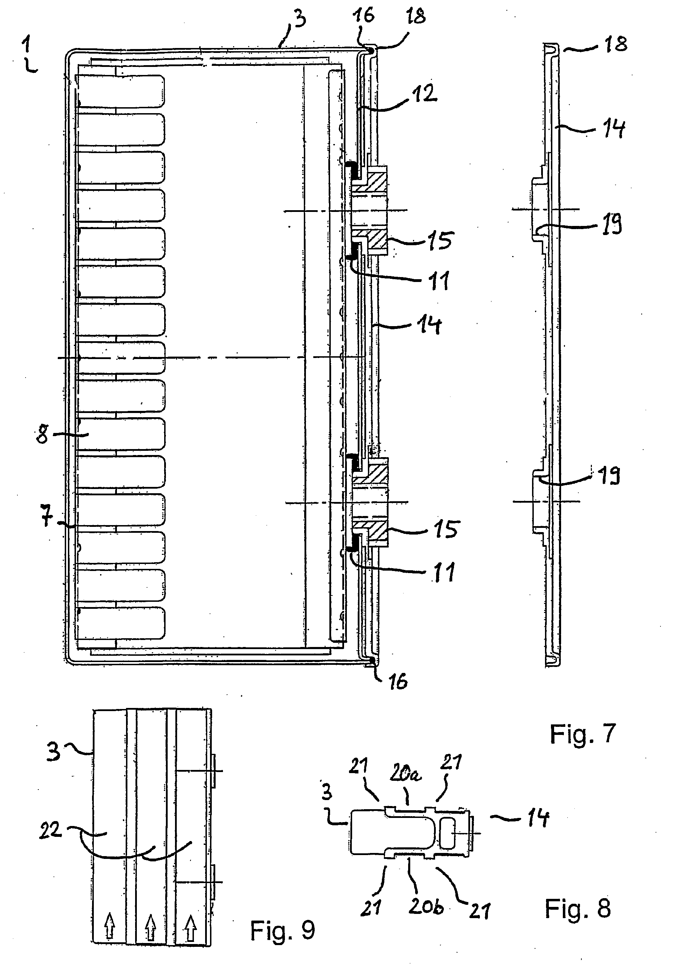

Die Figur 7 lässt eine zweite Ausführungsform des Akkumulators 1 erkennen, bei dem die Isolierbuchse 14 im Unterschied zur ersten Ausführungsform einteilig ist und sich im Wesentlichen über die Fläche des Deckels 12 bzw. die Öffnung im Gehäuse 3 erstreckt. Es ist erkennbar, dass an der Außenkante der Isolierbuchse 14 eine umlaufende Nut 18 vorgesehen ist, die auf die Verbindungskante zwischen Gehäuse 3 und Deckel 12 mit der Schweißnaht 16 aufgesteckt wird. Die Isolierbuchse hat im Bereich der zugeordneten Bohrungen des Deckels 12 Hülsenabschnitte 19, die sich in die Bohrung des Deckels 12 hinein erstrecken, wenn die Isolierbuchse 14 auf die Öffnung des Gehäuses 3 aufgesetzt ist.

Mit einer derartigen Isolierbuchse 14 wird die entsprechende Seitenkante des Akkumulators 1 zuverlässig vor Kurzschluss bildenden Kontakten geschützt.

Die Figur 8 lässt eine Aufsicht auf eine Ausführungsform der Isolierbuchse 14 erkennen, die zwei parallele sich von der Auflagefläche für den Deckel 12 und die Spannmutter 15 aus jeweils sich gegenüberliegenden Außenwänden des Gehäuses 3 weg erstreckende Abstandshalter 20a, 20b mit voneinander beabstandeten Rippen 21 hat, wobei auf jeder Seite mindestens eine Rippe 21 vorgesehen sein sollte. Durch die Abstandshalter 20 mit den Rippen 21 wird sichergestellt, dass sich nebeneinander angeordnete Akkumulatoren 1 nicht berühren und dadurch gegebenenfalls einen Kurzschluss verursachen. Zudem werden, wie in der Figur 9 aus der Seitenansicht auf einen Akkumulator 1 erkennbar ist, Kühlkanäle 22 geschaffen. Durch die Kühlkanäle 22 kann Luft parallel zur Akkumulatorachse strömen.

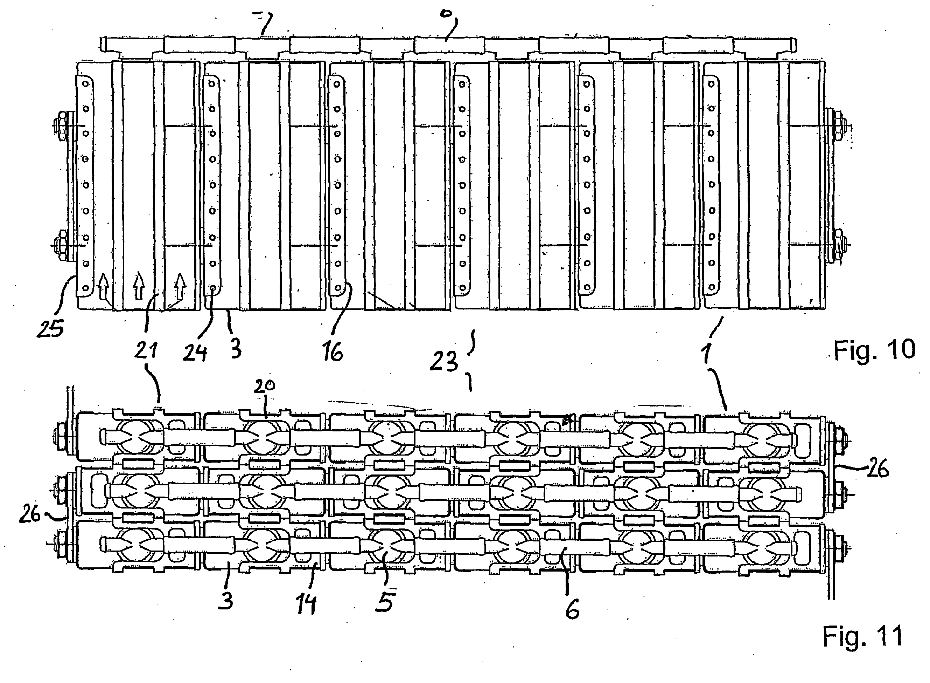

Die Figur 10 lässt eine Seitenansicht eines Akkumulatorblocks 23 erkennen, bei dem mehrere Akkumulatoren 1 in eine Reihe hintereinander geschaltet sind. Hierzu ist das mit dem Anschlusskontakt-Gewindebolzen 10 bzw. Spannmuttern 5 verbundene U-förmige Verbindungsprofil 16 an Schweißpunkten 24 mit dem Gehäuse 3 des angrenzenden Akkumulators 1 verschweißt. Die Verschweißung erfolgt an den Flankenabschnitten von der Seite, so dass die Schweißpositionen der Schweißpunkte 24 gut zugänglich sind. Zur Punktschweißung sind in den Flankenabschnitten des Verbindungsprofils 16 vorzugsweise Bohrungen vorgesehen.

Weiterhin ist aus der Figur 10 der Anschluss der Gasüberdruckventile mit den T-Stücken 5 und den Gasableitschläuchen 6 erkennbar.

Das linke Ende des Akkumulatorblocks 23 ist mit einem Abschluss-Verbindungsprofil 25 verschweißt, an dem Schraubverbinder zum elektrischen Anschluss des Akkumulatorblocks 23 angebracht sind.

Die Figur 11 lässt eine Draufsicht auf eine aus drei Längsreihen von Akkumulatoren 1 bestehenden Akkumulatorenblocks 23 erkennen. Es wird deutlich, dass die Reihen von Akkumulatorenblöcken 1 wechselweise um jeweils 180 °C gedreht sind, so dass an einem Anschlussende der negative Polanschluss mit dem positiven Polanschluss einer angrenzenden Reihe von Akkumulatoren 1 mit Hilfe von Querverbindem 26 verschaltet werden kann.

Weiterhin sind die durch die Rippen 21 an den Abstandshaltern 20 gebildeten Kühlkanäle 22 erkennbar, durch die die Luft von unten nach oben durch den Akkumulatorblock 23 strömen kann. Auch wird deutlich, dass die Reihen von Akkumulatoren 1 durch die Abstandshalter 20 voneinander beabstandet gehalten werden.

Auf diese Weise können zum Aufbau eines Zellverbandes mehrere Akkumulatormodule zu einem Batterieverband beliebig miteinander verschaltet werden. Da die metallischen Wände der Akkumulatoren 1 zur Vermeidung von Kurzschlüssen nicht miteinander in Berührung kommen dürfen, werden die Akkumulatoren 1 vor der weiteren Verarbeitung mit einer dünnen Kunststofffolie überzogen oder durch die Aufbringung eines Isolierlacks elektrisch zur Umgebung isoliert. Die Aufbringung der Kunststoffschicht kann durch Umhüllung mit einem Schrumpfschlauch, der sich bei Erwärmung an die Außenwände anlegt. Die Isolierung der Akkumulatoren 1 voneinander kann auch durch enges Anpassen der Akkumulatoren 1 in eine dünnwandige Kunststoffschale mit U-förmigem Profil erfolgen.

Die Aufbringung eines Isolierlacks kann über einen unter Umständen mehrstufiges Tauchverfahren oder Sprühverfahren erfolgen. Nach Austrocknen des Lösungsmittels ergibt sich eine elektrische Isolierung des gesamten Akkumulatorenblocks 23 nach außen. Eine solche Isolierung hat neben der elektrischen Schutzfunktion die Eigenschaft, die Gehäuse 3 der Akkumulatoren 1 vor Korrosion zu schützen.

## Patentansprüche

1. Akkumulator (1) mit einem quaderförmigen Gehäuse (3), einem eine Vielzahl von alternierend übereinander angeordneten und mit zwischenliegenden Separatoren voneinander getrennten positiven und negativen Elektrodenplatten aufweisenden Elektrodenplattenstapel (2), sowie Elektrolyt in dem zum Einführen des Elektrodenplattenstapels (2) eine mit einem Deckel (12) verschließbare Öffnung aufweisenden Gehäuse (3), wobei die positiven Elektrodenplatten an einer ersten Seitenkante des Elektrodenplattenstapels (2) miteinander verbunden sind, die negativen Elektrodenplatten an der zweiten, der ersten Seitenkante gegenüberliegenden Seitenkante des Elektrodenplattenstapels (2) miteinander verbunden sind und die negativen Elektrodenplatten die Innenseite des Gehäuses (3) elektrisch kontaktieren,
**dadurch gekennzeichnet, dass**
- die negativen Elektrodenplatten mit einem umgebogene Kontaktlaschen (8) aufweisenden Ableiterkontaktblech (7) verbunden sind und die sich von der zweiten Seitenkante zur ersten Seitenkante des Elektrodenplattenstapels (2) erstreckenden Kontaktlaschen (8) federnd an der Innenseite des Gehäuses (3) anliegen und einen elektrischen Kontakt zu dem Gehäuse (3) bilden, und
- ein mit Anschlusskontakten der positiven Elektrodenplatten elektrisch und mechanisch verbindbares Verbindungsprofil (16) mit einem sich parallel zum Deckel erstreckenden U-förmigen Basisabschnitt und zwei parallelen Flankenabschnitten vorgesehen ist, die sich vom Basisabschnitt weg erstrecken und angeordnet sind, um das Gehäuse (3) eines angrenzenden Akkumulators (1) zu umfassen und elektrisch zu kontaktieren.

2. Akkumulator (1) nach Anspruch 1, **dadurch gekennzeichnet, dass** mindestens ein Anschlusskontakt-Gewindestab (10) an der ersten Seitenkante des Elektrodenplattenstapels (2) vorgesehen ist, der mit den positiven Elektrodenplatten über ein Ableiterkontaktblech (9) einen elektrischen Kontakt bildet, von der ersten Seitenkante hervorragt und durch eine zugeordnete Bohrung in dem Deckel (12) hindurch geführt ist, ein Dichtring den Anschlusskontakt-Gewindestab (10) umfasst und an der Innenseite des Deckels (12) anliegt, eine Isolierbuchse (14) als elektrischer Isolator den Anschlusskontakt-Gewindestab (10) umfasst, an der Außenseite des Deckels anliegt und sich in die Bohrung des Deckels (12) hinein erstreckt, und eine Spannmutter (15) auf den Anschlusskontakt-Gewindestab (10) geschraubt und auf die Isolierbuchse (14) zur Verspannung des Dichtrings (12) und der Isolierbuchse (14) an dem Deckel (12) aufgesetzt ist.

3. Akkumulator (1) nach Anspruch 1 oder 2, **gekennzeichnet durch** Metallschaum zwischen den Anschlussenden der negativen und/oder positiven Elektrodenplatten und einem zugeordneten Ableiterkontaktblech (7, 9).

4. Akkumulator (1) nach einem der Ansprüche 1 bis 3, **dadurch gekennzeichnet, dass** der Deckel (12) an seinem Außenumfang dicht mit dem Gehäuse (3) verschweißt ist.

5. Akkumulator (1) nach einem der Ansprüche 1 bis 4, **dadurch gekennzeichnet, dass** sich die Isolierbuchse (14) über die Fläche des Deckels (12) erstreckt und Hülsenabschnitte (19) zum Einstecken in die zugeordneten Bohrungen in dem Deckel (12) hat.

6. Akkumulator (1) nach einem der vorhergehenden Ansprüche, **dadurch gekennzeichnet; dass** an der Isolierbuchse (14) zwei parallele, sich von dem Deckelrand aus jeweils an den sich gegenüberliegenden Außenwänden des Gehäuses (3) mindestens teilweise entlang erstreckende Abstandshalter (20a, 20b) mit voneinander beabstandeten Rippen (21) zur Schaffung von Kühlkanälen (22) zwischen angrenzenden Akkumulatoren (1) vorgesehen sind.

7. Akkumulator (1) nach einem der vorhergehenden Ansprüche, **dadurch gekennzeichnet, dass** die Dichtringe (11) als O-Ringe aus gummihaltigem Material ausgeführt sind.

8. Akkumulator (1) nach einem der vorhergehenden Ansprüche, **gekennzeichnet durch** ein aus einer Seitenkante des Gehäuses (3) herausgeführtes Gasüberdruckventil (4).

9. Akkumulatorblock (23) mit einer Vielzahl von Akkumulatoren (1) nach einem der vorhergehenden Ansprüche, **dadurch gekennzeichnet, dass** mindestens einige aneinander angrenzende Akkumulatoren (1) mit einem U-förmigen Verbindungsprofil (16) elektrisch und mechanisch miteinander verbunden sind, wobei zwei parallele, sich von einem Basisabschnitt weg erstreckende Flankenabschnitte das Gehäuse (3) eines Akkumulators (1) umfassen und mit dem Gehäuse (3) verschweißt sind, und der Basisabschnitt mit dem mindestens einen Anschlusskontakt-Gewindestab (10) des angrenzenden Akkumulators (1) verbunden ist.

10. Akkumulatorblock (23) nach Anspruch 9, **dadurch gekennzeichnet, dass** die Gasüberdruckventile (4) in einer Folge aneinander angrenzender Akkumulatoren (1) mit einem Gasableitschlauch (6) verbunden sind.

11. Akkumulatorblock (23) nach Anspruch 9 oder 10, **dadurch gekennzeichnet, dass** die Akkumulatoren (1) zur Isolierung mit einer Kunststofffolie, einem Schrumpfschlauch oder einem Isolierlack überzogen sind.

12. Verfahren zur Herstellung von Akkumulatoren (1) und Akkumulatorenblöcken (23) nach einem der Ansprüche 9 bis 11 mit den Schritten:
a) Einschieben eines Elektrodenplattenstapels (2) mit einem federnde Kontaktlaschen (8) aufweisenden Ableiterkontaktblech (7) an den negativen Elektrodenplatten in das Gehäuse (3) des Akkumulators (1) so, dass die Kontaktlaschen (8) federnd an der Innenseite des Gehäuses (3) anliegen und mindestens ein Anschlusskontakt-Gewindestab (10) an der dem Ableiterkontaktblech (7) gegenüberliegenden Seitenkante des Elektrodenplattenstapels (2) aus der Öffnung des Gehäuses (3), durch die der Elektrodenplattenstapel (2) in das Gehäuse (3) eingeschoben wird, herausragt;
b) Aufsetzen von Dichtringen (11) auf den mindestens einen Anschlusskontakt-Gewindestab (10),
c) Auflegen eines Bohrungen aufweisenden Deckels (12) auf die Öffnung derart, dass jeweils ein Anschlusskontakt-Gewindestab (10) durch eine zugeordnete Bohrung ragt,
d) Verbinden des Deckels (12) mit dem Gehäuse (3) so, dass die Öffnung dicht verschlossen ist,
e) Aufsetzen mindestens einer Isolierbuchse (14) auf den Deckel (12), wobei sich jeweils ein Abschnitt der Isolierbuchse (14) in den Zwischenraum eines zugeordneten Anschlusskontakt-Gewindestabs (10) und der Bohrung des Deckels (12) hineinerstreckt, und
f) Aufschrauben jeweils einer Spannmutter (15) auf einen zugeordneten Anschlusskontakt-Gewindestab (10) und Verspannen des Dichtrings (11) und der Isolierbuchse (14) mit dem Deckel (12) zum dichten Verschließen der Bohrung,
g) Verbinden eines U-förmigen Verbindungsprofils (16) mit den Anschlusskontakt-Gewindestäben (10) eines Elektrodenplattenstapels (2) und
h) Einschieben eines Gehäuses (3) eines angrenzenden Akkumulators (1) in das Verbindungsprofil (16) so, dass sich zwei parallele Flankenabschnitte, die sich von einem mit den Anschlusskontakt-Gewindestäben (10) verbundenen Basisabschnitt des Verbindungsprofils (16) weg erstrecken, das Gehäuse (3) des angrenzenden Akkumulators (1) umfassen und elektrisch kontaktieren.

13. Verfahren nach Anspruch 12, **gekennzeichnet durch** Verschweißen der Flankenabschnitte mit dem Gehäuse (3) des angrenzenden Akkumulators (1).

14. Verfahren nach einem der Ansprüche 12 oder 13, **gekennzeichnet durch** Anschließen von Gasüberdruckventilen (4) an den Gehäusen (3) der Akkumulatoren (1) an einen gemeinsamen Gasableitschlauch (6).

## Claims

1. A rechargeable battery (1) having a cuboid housing (3), an electrode plate stack (2), which has a multiplicity of positive and negative electrode plates which are separated from one another by intermediate separators and are arranged alternately one above the other, as well as electrolyte in the housing (3), which has an opening, which can be closed by a cover (12), for insertion of the electrode plate stack (2), with the positive electrode plates being connected to one another on a first side edge of the electrode plate stack (2), with the negative electrode plates being connected to one another on the second side edge, opposite the first side edge, of the electrode plate stack (2), and with the negative electrode plates making electrical contact with the inner face of the housing (3),
**characterized in that**
- the negative electrode plates are connected to an output contact sheet (7) which has bent-around contact lugs (8), and the contact lugs (8) extend from the second side edge to the first side edge of the electrode plate stack (2), whilst in a sprung manner on the inner face of the housing (3) and form an electrical contact with the housing (3), and
- a connection profile (16) which can be electrically and mechanically connected to connecting contacts of the positive electrode plates and has a U-shaped base section extending parallel to the cover, and two parallel flank sections are provided, which extend away from the base section and are arranged in order to surround and to make electrical contact with the housing (3) of an adjacent rechargeable battery (1).

2. The rechargeable battery (1) as claimed in claim 1, **characterized in that** at least one connecting contact threaded rod (10) is provided on the first side edge of the electrode plate stack (2), which makes an electrical contact via an output contact sheet (9) with the positive electrode plates, projects from the first side edge and is passed through an associated hole in the cover (12), a sealing ring surrounds the connecting contact threaded rod (10) and rests on the inner face of the cover (12), an insulating bush (14) as an electrical insulator surrounds the connecting contact threaded rod (10), rests on the outer face of the cover and extends into the hole in the cover (12) and a tightening nut (15) is screwed to the connecting contact threaded rod (10) and is placed on the insulating bush (14) in order to brace the sealing ring (11) and the insulating bush (14) against the cover (12).

3. The rechargeable battery (1) as claimed in claim 1 or 2, **characterized by** metal foam between the connecting ends of the negative and/or positive electrode plates and an associated output contact sheet (7, 9).

4. The rechargeable battery (1) as claimed in one of claims 1 to 3, **characterized in that** the external circumference of the cover (12) is welded to the housing (3), forming a seal.

5. The rechargeable battery (1) as claimed in one of claims 1 to 4, **characterized in that** the insulating bush (14) extends over the area of the cover (12) and has sleeve sections (19) for insertion into the associated holes in the cover (12).

6. The rechargeable battery (1) as claimed in one of the preceding claims, **characterized in that** two parallel spacers (20a, 20b), which each extend at least partially from the cover ring on the mutually opposite outer walls of the housing (3), are provided on the insulating bush (14) and have ribs (21) at a distance from one another in order to create cooling channels (22) between adjacent rechargeable batteries (1).

7. The rechargeable battery (1) as claimed in one of the preceding claims, **characterized in that** the sealing rings (11) are in the form of O-rings composed of material containing rubber.

8. The rechargeable battery (1) as claimed in one of the preceding claims, **characterized by** a gas pressure-relief valve (4) which passes out of one side edge of the housing (3).

9. A rechargeable battery block (23) having a multiplicity of rechargeable batteries (1) as claimed in one of the preceding claims, **characterized in that** at least some mutually adjacent rechargeable batteries (1) are electrically and mechanically connected to each other by a U-shaped connection profile (16), with two parallel flank sections, which extend away from a base section, surrounding the housing (3) of one rechargeable battery (1) and being welded to the housing (3), and with the base section being connected to the at least one connecting contact threaded rod (10) of the adjacent rechargeable battery (1).

10. The rechargeable battery block (23) as claimed in claim 9, **characterized in that** the gas pressure-relief valves (4) in a sequence of mutually adjacent rechargeable batteries (1) are connected to a flexible gas outlet tube (6).

11. The rechargeable battery block (23) as claimed in claim 9 or 10, **characterized in that** the rechargeable batteries (1) are coated, for insulation purposes, with a plastic film, a shrink sleeve or an insulating varnish.

12. A method for production of rechargeable batteries (1) and rechargeable battery blocks (23) as claimed in one of claims 9 to 11, having the following steps:
a) insertion of an electrode plate stack (2) having an output contact sheet (7), which has sprung contact lugs (8) on the negative electrode plates, into the housing (3) of the rechargeable battery (1) such that the contact lugs (8) rest in a sprung manner against the inner face of the housing (3), and at least one connecting contact threaded rod (10) on the side edge opposite the output contact sheet (7) of the electrode plate stack (2) projects out of the opening in the housing (3) through which the electrode plate stack (2) is inserted into the housing (3);
b) fitting of sealing rings (11) to the at least one connecting contact threaded rod (10),
c) placing a cover (12) which has holes, onto the opening such that one connecting contact threaded rod (10) in each case projects through an associated hole,
d) connection of the cover (12) to the housing (3) such that the opening is closed forming a seal,
e) placing of at least one insulating bush (14) onto the cover (12) with in each case one section of the insulating bush (14) extending into the intermediate space of an associated connecting contact threaded rod (10) and the hole in the cover (12), and
f) screwing in each case one tightening nut (15) onto an associated connecting contact threaded rod (10) and bracing of the sealing ring (11) and of the insulating bush (14) to the cover (12) in order to close the hole forming a seal,
g) connection of a U-shaped connection profile (16) to the connecting contact threaded rods (10) of an electrode plate stack (2), and
h) insertion of a housing (3) of an adjacent rechargeable battery (1) into the connection profile (16) such that two parallel flank sections, which extend away from a base section of the connection profile (16) which is connected to the connecting contact threaded rods (10), surround and make electrical contact with the housing (3) of the adjacent rechargeable battery (1).

13. The method as claimed in claim 12, **characterized by** welding flank sections to the housing (3) of the adjacent rechargeable battery (1).

14. The method as claimed in one of claims 12 or 13, **characterized by** connecting gas pressure-relief valves (4) on the housings (3) of the rechargeable batteries (1) being connected to a common flexible gas outlet tube (6).

## Revendications

1. Accumulateur (1) comprenant un boîtier (3) en forme de parallélépipède rectangle, une pile de plaques électrodes (2) présentant une pluralité de plaques électrodes positives et négatives agencées les unes sur les autres alternativement et séparées les unes des autres par des séparateurs intermédiaires, ainsi qu'un électrolyte dans le boîtier (3) présentant pour l'introduction de la pile de plaques électrodes (2) une ouverture qui peut être obturée avec un couvercle (12), accumulateur dans lequel les plaques électrodes positives sont reliées ensemble à un premier bord latéral de la pile de plaques électrodes (2), les plaques électrodes négatives sont reliées ensemble à un deuxième bord latéral de la pile de plaques électrodes (2) opposé au premier bord latéral, et les plaques électrodes négatives sont en contact électrique avec le côté intérieur du boîtier (3),
**caractérisé en ce que**,
- les plaques électrodes négatives sont reliées à une tôle de contact de dérivation (7) présentant des pattes de contact (8) recourbées et les pattes de contact (8) s'étendant depuis le deuxième bord latéral jusqu'au premier bord latéral de la pile de plaques électrodes (2) sont en contact élastique avec le côté intérieur du boîtier (3) et forment un contact électrique avec le boîtier (3), et
- il est prévu un profilé de liaison (16) pouvant être relié électriquement et mécaniquement avec des contacts de raccordement des plaques électrodes positives, ce profilé comprenant une section de base en forme de U s'étendant parallèlement au couvercle et deux sections d'aile parallèles qui s'étendent à partir de la section de base et qui sont agencées pour embrasser le boîtier (3) d'un accumulateur (1) voisin et établir un contact électrique avec celui-ci.

2. Accumulateur (1) selon la revendication 1, **caractérisé en ce qu'**il est prévu sur le premier bord latéral de la pile de plaques électrodes (2) au moins une tige filetée de contact de raccordement (10) qui forme un contact électrique avec les plaques électrodes positives par l'intermédiaire d'une tôle de contact de dérivation (9), fait saillie par rapport au premier bord latéral et qui traverse un perçage associé dans le couvercle (12), **en ce que** la tige filetée de contact de raccordement (10) est entourée par une bague d'étanchéité adjacente au côté intérieur du couvercle (12), **en ce qu'**une douille isolante (14) faisant office d'isolateur électrique entoure la tige filetée de contact de raccordement (10), est adjacente au côté extérieur du couvercle et pénètre dans le perçage du couvercle (12), et **en ce qu'**un écrou de serrage (15) est vissé sur la tige filetée de contact de raccordement (10) et sur la douille isolante (14) pour le serrage de la bague d'étanchéité (11) et de la douille isolante (14) sur le couvercle (12).

3. Accumulateur (1) selon la revendication 1 ou 2, **caractérisé par** de la mousse métallique entre les extrémité de raccordement des plaques électrodes négatives et/ou positives et une tôle de contact de dérivation (7, 9) associée.

4. Accumulateur (1) selon l'une des revendications 1 à 3, **caractérisé en ce que** sur son pourtour extérieur le couvercle (12) est soudé de manière étanche avec le boîtier (3).

5. Accumulateur (1) selon l'une des revendications 1 à 4, **caractérisé en ce que** la douille isolante (14) s'étend sur la surface du couvercle (12) et a des sections en douille (19) destinées à s'enfoncer dans les perçages associés dans le couvercle (12).

6. Accumulateur (1) selon l'une des revendications précédentes, **caractérisé en ce que** sur la douille isolante (14) sont prévues deux entretoises (20a, 20b) parallèles s'étendant à partir du bord du couvercle chacune au moins partiellement le long des parois extérieures du boîtier (3) situées en regard et comprenant des nervures (21) espacées les unes des autres pour créer des canaux de refroidissement (22) entre accumulateurs (1) voisins.

7. Accumulateur (1) selon l'une des revendications précédentes, **caractérisé en ce que** les bagues d'étanchéité (11) sont réalisées sous la forme d'anneaux en O en matériau contenant du caoutchouc.

8. Accumulateur (1) selon l'une des revendications précédentes, **caractérisé par** une soupape de surpression de gaz (4) sortant d'un bord latéral du boîtier (3).

9. Bloc accumulateur (23) comprenant plusieurs accumulateurs (1) selon l'une des revendications précédentes, **caractérisé en ce qu'**au moins quelques accumulateurs (1) voisins les uns des autres sont reliés ensemble électriquement et mécaniquement grâce à un profilé de liaison (16) en forme de U, bloc dans lequel deux sections d'aile parallèles s'étendant à partir d'une section de base embrassent le boîtier (3) d'un accumulateur (1) et sont soudées avec le boîtier (3), et la section de base est reliée avec l'au moins une tige filetée de contact de raccordement (10) de l'accumulateur (1) voisin.

10. Bloc accumulateur (23) selon la revendication 9, **caractérisé en ce que** dans une suite d'accumulateurs (1) voisins, les soupapes de surpression de gaz (4) sont reliées les unes des autres grâce à un tuyau d'évacuation de gaz (6).

11. Bloc accumulateur (23) selon la revendication 9 ou 10, **caractérisé en ce qu'**à des fins d'isolation les accumulateurs (1) sont recouverts par un film de matière synthétique, un tube rétractable, ou un vernis isolant.

12. Procédé de fabrication d'accumulateurs (1) et de blocs d'accumulateurs (23) selon l'une des revendications 9 à 11, comprenant les étapes suivantes :
a) on insère dans le boîtier (3) de l'accumulateur (1) une pile de plaques électrodes (2) avec une tôle de contact de dérivation (7) présentant des pattes de contact (8) élastiques située sur les plaques électrodes négatives, de façon que les pattes de contact (8) soient en contact élastique avec le côté intérieur du boîtier (3) et que sur le bord latéral de la pile de plaques électrodes (2) opposé à la tôle de contact de dérivation (7), au moins une tige filetée de contact de raccordement (10) fasse saillie, hors de l'ouverture du boîtier (3), par laquelle on insère la pile de plaques électrodes (2) dans le boîtier (3) ;
b) on installe des bagues d'étanchéité (11) sur l'au moins une tige filetée de contact de raccordement (10),
c) on dépose sur l'ouverture un couvercle (12) présentant des perçages, de façon qu'à chaque fois une tige filetée de contact de raccordement (10) se dresse à travers un perçage correspondant,
d) on relie le couvercle (12) avec le boîtier (3), de façon que l'ouverture soit fermée de façon étanche,
e) on installe au moins une douille isolante (14) sur le couvercle (12), dans laquelle à chaque fois une section de la douille isolante (14) pénètre dans l'interstice d'une tige filetée de contact de raccordement (10) associée et du perçage du couvercle (12), et
f) on visse à chaque fois un écrou de serrage (15) sur une tige filetée de contact de raccordement (10) associée et on serre la bague d'étanchéité (11) et la douille isolante (14) avec le couvercle (12) pour réaliser une obturation étanche du perçage,
g) on relie un profilé de liaison (16) en forme de U avec les tiges filetées de contact de raccordement (10) d'une pile de plaques électrodes (2) et
h) on insère un boîtier (3) d'un accumulateur (1) voisin dans le profilé de liaison (16) de façon que deux sections d'aile parallèles, qui s'étendent à partir d'une section de base appartenant au profilé de liaison (16) et reliée aux tiges filetées de contact de raccordement (10), embrassent le boîtier (3) de l'accumulateur (1) voisin et établissent un contact électrique avec celui-ci.

13. Procédé selon la revendication 12, **caractérisé par** la soudure des sections d'aile avec le boîtier (3) de l'accumulateur ( 1) voisin.

14. Procédé selon la revendication 12 ou 13, **caractérisé par** le raccordement de soupapes surpression de gaz (4) sur les boîtiers (3) des accumulateurs (1) par un tuyau d'évacuation de gaz (6) commun.
